# EUROPEAN PATENT APPLICATION

(11) **EP 3 910 407 A1**
(43) Date of publication of application: **17.11.2021**
(21) Application number: 21172966.0
(22) Date of filing: 10.05.2021
(51) Int. Cl.: G02B 27/01, G06T 19/00

(54) **EYEWEAR DISPLAY SYSTEM AND EYEWEAR DISPLAY METHOD**

(30) Priority: 08.05.2020 JP 2020082865
(71) Applicant: TOPCON CORPORATION, Tokyo 174-8580 (JP)
(72) Inventor: KIKUCHI, Takeshi, Tokyo, 174-8580 (JP)
(74) Representative: dompatent von Kreisler Selting Werner - Partnerschaft von Patent- und Rechtsanwälten mbB

(57) **Abstract**

Provided is a technology for assisting observation of point cloud data without omission according to an on-site situation even when CAD design data differ from the on-site situation. A display system (1) includes: a scanner (2) configured to acquire three-dimensional point cloud data; an eyewear device (4) including a display (41) and capable of acquiring a position and a direction; and a difference detecting device (49) configured to detect a difference between CAD design data of an observation site and the site, and is configured to receive information on a position and a direction of the scanner (2), information on a position and a direction of the eyewear device (4), and information on a position and a direction of the difference detecting device (49), synchronize a coordinate space of the scanner (2), a coordinate space of the eyewear device (4), a coordinate space of the difference detecting device (49), and a coordinate space of the CAD design data, calculate the difference in a synchronized coordinate space, correct the CAD design data based on calculation results of the difference, and display the corrected CAD design data on the display (41).

## Description

### TECHNICAL FIELD

The present invention relates to an eyewear display system, and more specifically to an eyewear display system and an eyewear display method for assisting point cloud data observation using a ground-mounted scanner.

### BACKGROUND

Conventionally, point cloud data observation using a ground-mounted scanner has been known (for example, refer to Patent Literature 1). In point cloud data observation, in order to realize desired observation accuracy, it is necessary to secure point cloud density. Therefore, in order to secure desired point cloud density, it is necessary to set scanner installation points so that data acquisition regions overlap to some degree, and observe point cloud data from a plurality of points.

### Citation List

### Patent Literature

Patent Literature 1 Japanese Published Unexamined Patent Application No. 2018-28464

### SUMMARY OF INVENTION

### Technical Problem

However, point cloud data observation using a scanner is premised on post-processing of data. This causes a problem in which, when observing point cloud data from a plurality of points, in a case where there is measurement omission or a point cloud where point cloud overlap is insufficient, it is necessary for a worker to go to the site to perform remeasurement.

Therefore, the inventor considered converting the coordinate space systems of an eyewear display device and CAD (Computer Aided Design) design data of an observation site into the same coordinate space system, and displaying a wire frame of the CAD design data superimposed on an actual landscape of the site (hereinafter, referred to as "actual landscape"), and displaying a point cloud data acquisition status and observation data prediction on the eyewear device, and these were utilized to assist data acquisition without omission. (In this description, management of relative positions and relative directions concerning respective devices in a space with an origin set at a common reference point by matching coordinate spaces of information on positions and directions in the devices or design data having mutually different coordinate spaces is referred to as synchronization.)

However, at an actual site, there may arise situations that cannot be predicted from CAD design data, such as newly installed structures, people, cars, trees and electric wires. This poses a problem in which the CAD design data cannot be utilized sufficiently.

The present invention has been made in view of these circumstances, and an object thereof is to provide a technology for assisting point cloud data observation without omission according to an on-site situation even when CAD design data differ from the on-site situation.

### Solution to Problem

In order to achieve the object described above, an eyewear display system according to an aspect of the present invention includes: a scanner including a point cloud data acquiring unit configured to acquire point cloud data by measuring distances and angles of irradiation points by horizontal and vertical scanning with distance-measuring light; an eyewear device including a display, a relative position detection sensor configured to detect a position of the device, and a relative direction detection sensor configured to detect a direction that the device faces; a storage device including CAD design data of an observation site; a difference detecting device configured to detect a difference between the CAD design data and the site; and a data processing device including a synchronization measuring unit configured to receive information on a position and a direction of the scanner, information on a position and a direction of the eyewear device, and information on a position and a direction of the difference detecting device, and synchronize a coordinate space of the scanner, a coordinate space of the eyewear device, a coordinate space of the difference detecting device, and a coordinate space of the CAD design data, a difference calculating unit configured to calculate the difference in a synchronized coordinate space, and a design data correcting unit configured to generate corrected CAD design data by correcting the CAD design data based on calculation results of the difference, wherein the scanner, the eyewear device, the storage device, and the difference detecting device are connected to the data processing device so as to enable data inputs and outputs, and the synchronization measuring unit converts the corrected CAD design data into a wire frame viewed from the eyewear device, and the eyewear device displays the wire frame of the corrected CAD design data on an actual landscape on the display.

In the aspect described above, it is also preferable that the difference detecting device is a camera, and the camera is fixed to the eyewear device so that their positional relationship is known, and the difference calculating unit calculates the difference by performing a photo survey by using imaging data around the difference captured from two or more points by the camera.

In the aspect described above, it is also preferable that the difference detecting device is the scanner, and the difference calculating unit calculates the difference based on three-dimensional point cloud data around the difference acquired by the scanner.

In the aspect described above, it is also preferable that the eyewear device includes an instrument point setting unit enables a worker to temporary designate a next instrument point on display of the display, the data processing device includes an observation data prediction calculating unit configured to calculate a region in which point cloud data are predicted to be acquirable at a predetermined density or more as observation data prediction when the scanner is installed at the temporarily designated next instrument point by calculating coordinates of the next instrument point, and output the observation data prediction to the eyewear device, the observation data prediction calculating unit calculates observation data prediction in consideration of performance of the scanner and a three-dimensional structure in the corrected CAD design data, and the eyewear device displays the wire frame and the observation data prediction on the display by superimposing the wire frame and the observation data prediction on the actual landscape.

In the aspect described above, it is also preferable that the observation data prediction is two-dimensionally displayed on a ground surface of the observation site on the display.

In the aspect described above, it is also preferable that the observation data prediction is three-dimensionally displayed in an observation site space on the display.

In the aspect described above, it is also preferable that the performance of the scanner is an irradiation distance of the distance-measuring light, a pulse interval of the distance-measuring light, and rotation speed setting of the scanner.

In the aspect described above, it is also preferable that the instrument point setting unit temporarily designates the next instrument point with enlarging the display on the display in accordance with the worker's operation.

In the aspect described above, it is also preferable that the observation data prediction is displayed in such a manner that a first region with point cloud density falling within a desired range, and a second region with point cloud data density lower than that of the first region, but in which desired overlapping by setting an instrument point after the next in this region and acquiring point cloud data, the second region being disposed at an outer circumferential side of the first region are distinguishable.

Another aspect of the present invention is an eyewear display method using an eyewear display system including a scanner including a point cloud data acquiring unit configured to acquire point cloud data by measuring distances and angles to irradiation points by horizontal and vertical scanning with distance-measuring light, an eyewear display device including a display, a relative position detection sensor configured to detect a position of the device, and a relative direction detection sensor configured to detect a direction that the device faces, a storage device including CAD design data of an observation site, a difference detecting device configured to detect a difference between the CAD design data and the site, and a data processing device configured to connect to the scanner, the eyewear device, the storage device, and the difference detecting device are connected to the data processing device so as to enable data inputs and outputs. The method includes: the data processing device receiving information on a position and a direction of the scanner, information on a position and a direction of the eyewear device, and information on a position and a direction of the difference detecting device, and synchronizing a coordinate space of the scanner, a coordinate space of the eyewear device, a coordinate space of the difference detecting device, and a coordinate space of the CAD design data, the data processing device calculating the difference in a synchronized coordinate space, the data processing device generating corrected CAD design data by correcting the CAD design data based on calculation results of the difference, the data processing device converting the corrected CAD design data into a wire frame viewed from the eyewear device, and the eyewear display device displaying the wire frame of the corrected CAD design data superimposed on an actual landscape on the display.

### BENEFIT OF INVENTION

With the eyewear display system and the eyewear display method according to the aspects described above, even when CAD design data differ from the on-site situation, a difference between the CAD design data and the on-site situation can be detected and the CAD design data can be corrected according to the on-site situation. By using the corrected CAD design data, observation data prediction corresponding to the on-site situation can be calculated and displayed, so that a worker can set an optimum next instrument point, and can assist point cloud data observation without omission according to the on-site situation.

### BRIEF DESCRIPTION OF DRAWINGS

FIG. 1 is a work image view of an eyewear display system according to a first embodiment of the present invention.
FIG. 2 is a configuration block diagram of the display system according to the same embodiment.
FIG. 3 is a configuration block diagram of a scanner in the same display system.
FIG. 4 is an external perspective view of an eyewear device in the same display system.
FIG. 5 is a configuration block diagram of the same eyewear device.
FIG. 6 is a configuration block diagram of a processing PC in the same embodiment.
FIG. 7 is a flowchart of a method for using the display system according to the same embodiment.
FIG. 8 is a view illustrating a work image of the same use method.
FIGS. 9A to 9F are bird's-eye views of images obtained by the display system in the same method.
FIGS. 10A to 10D are diagrams describing examples of temporary designation of a next instrument point in the same method.
FIGS. 11A to 11C are diagrams describing a method for calculating observation data prediction in the display system described above.
FIG. 12 is a configuration block diagram of a display system according to a modification of the same embodiment.
FIG. 13 is a configuration block diagram of a display system according to another modification of the same embodiment.
FIG. 14 is a configuration block diagram of a display system according to still another modification of the same embodiment.
FIG. 15 is a configuration block diagram of a display system according to a second embodiment of the present invention.

### DESCRIPTION OF EMBODIMENTS

Hereinafter, preferred embodiments of the present invention will be described with reference to the drawings, however, the present invention is not limited to these. The same components common to the embodiments and modifications are provided with the same reference signs, and overlapping descriptions are omitted as appropriate.

### Embodiments

### Entire Configuration

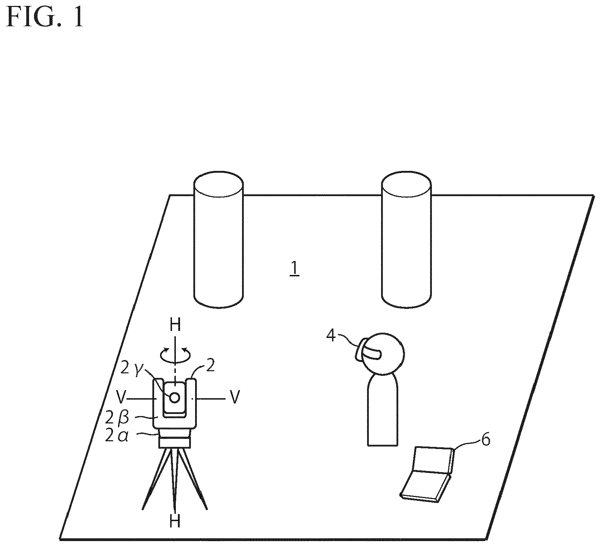

FIG. 1 is a work image view at a measurement site of an eyewear display system (hereinafter, simply referred to as a "display system") 1 according to an embodiment of the present invention. The display system 1 includes a scanner 2, an eyewear device 4, and a processing PC 6.

The scanner 2 is installed at an arbitrary point via a leveling base mounted on a tripod. The scanner 2 includes a base portion 2α provided on the leveling base, a bracket portion 2β that rotates horizontally about an axis H-H on the base portion 2α, and a light projecting portion 2γ that rotates vertically at the center of the bracket portion 2β. The eyewear device 4 is worn on the head of a worker. The processing PC 6 is installed at an observation site.

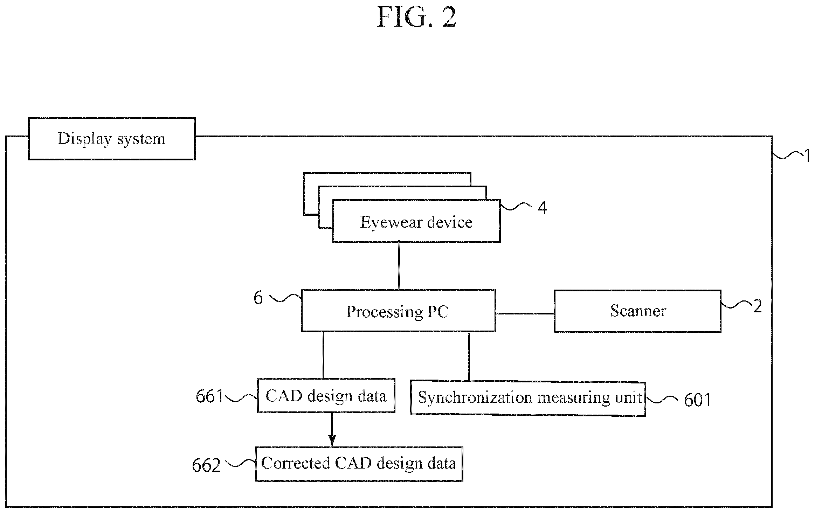

FIG. 2 is a configuration block diagram of the same display system 1. In the display system 1, the scanner 2 and the eyewear device 4 are connected to the processing PC 6 wirelessly or by wire. The number of eyewear devices 4 is not particularly limited, and may be one or plural in number. When the number of eyewear devices 4 is plural in number, each eyewear device 4 is configured so as to be identified by its unique ID, etc.

### Scanner

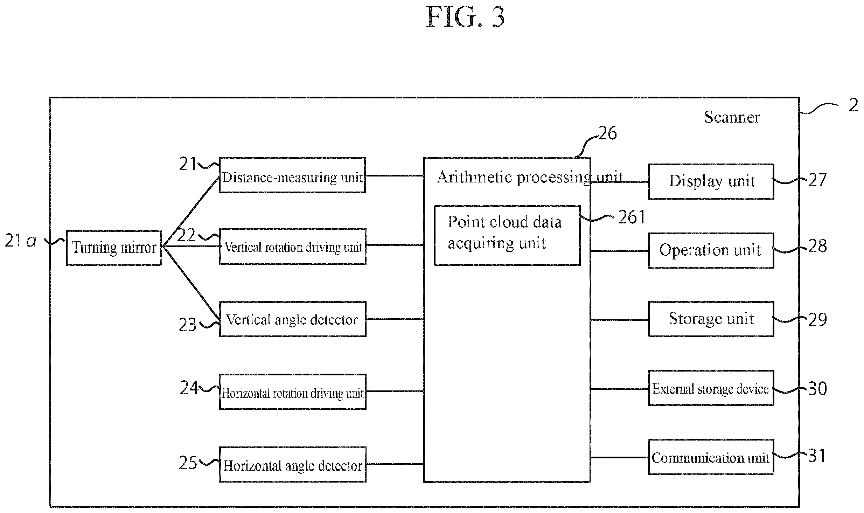

FIG. 3 is a configuration block diagram of the scanner 2 according to this embodiment. The scanner 2 includes a distance-measuring unit 21, a vertical rotation driving unit 22, a vertical angle detector 23, a horizontal rotation driving unit 24, a horizontal angle detector 25, an arithmetic processing unit 26, a display unit 27, an operation unit 28, a storage unit 29, an external storage device 30, and a communication unit 31.

The distance-measuring unit 21 includes a light transmitting unit, a light receiving unit, a light transmitting optical system, a light receiving optical system sharing optical elements with the light transmitting optical system, and a turning mirror 21α. The light transmitting unit includes a light emitting element such as a semiconductor laser, and emits pulsed light as distance-measuring light. The emitted distance-measuring light enters the turning mirror 21α through the light transmitting optical system, and is deflected by the turning mirror 21α and irradiated onto a measuring object. The turning mirror 21α rotates about a rotation axis V-V by being driven by the vertical rotation driving unit 22.

The distance-measuring light retroreflected by the measuring object enters the light receiving unit through the turning mirror 21α and the light receiving optical system. The light receiving unit includes a light receiving element such as a photodiode. A part of the distance-measuring light enters the light receiving unit as internal reference light, and based on the reflected distance-measuring light and internal reference light, a distance to an irradiation point is obtained by the arithmetic processing unit 26.

The vertical rotation driving unit 22 and the horizontal rotation driving unit 24 are motors, and are controlled by the arithmetic processing unit 26. The vertical rotation driving unit 22 rotates the turning mirror 21α about the axis V-V in the vertical direction. The horizontal rotation driving unit 24 rotates the bracket portion 2β about the axis H-H in the horizontal direction.

The vertical angle detector 23 and the horizontal angle detector 25 are encoders. The vertical angle detector 23 measures a rotation angle of the turning mirror 21α in the vertical direction. The horizontal angle detector 25 measures a rotation angle of the bracket portion 2β in the horizontal direction.

The arithmetic processing unit 26 is a microcontroller configured by mounting, for example, a CPU, a ROM, a RAM, etc., on an integrated circuit. The arithmetic processing unit 26 calculates a distance to an irradiation point of each one-pulse light of the distance-measuring light based on a time difference between a light emission timing of the light transmitting unit and a light receiving timing of the light receiving unit (a reflection time of the pulsed light). In addition, the arithmetic processing unit 26 calculates an irradiation angle of the distance-measuring light at this time, and calculates an angle of the irradiation point.

The arithmetic processing unit 26 includes a point cloud data acquiring unit 261 configured by software. The point cloud data acquiring unit 261 acquires entire circumferential point cloud data by acquiring coordinates of each irradiation point by performing entire circumferential (360°) scanning (full dome scanning) with the distance-measuring light by controlling the distance-measuring unit 21, the vertical rotation driving unit 22, and the horizontal rotation driving unit 24.

The display unit 27 is, for example, a liquid crystal display. The operation unit 28 includes a power key, numeric keys, a decimal key, plus/minus keys, an enter key, and a scroll key, etc., and is configured to enable a worker to operate the scanner 2 and input information into the scanner 2.

The storage unit 29 is, for example, a hard disk drive, and stores programs for executing functions of the arithmetic processing unit 26.

The external storage device 30 is, for example, a memory card, etc., and stores various data acquired by the scanner 2.

The communication unit 31 enables communication with an external network, and connects to the Internet by using an Internet protocol (TCP/IP), and transmits and receives information to and from the eyewear device 4 and the processing PC 6.

### Eyewear Device

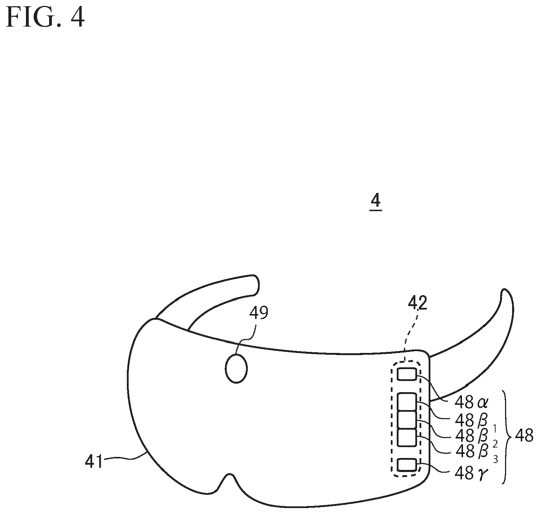

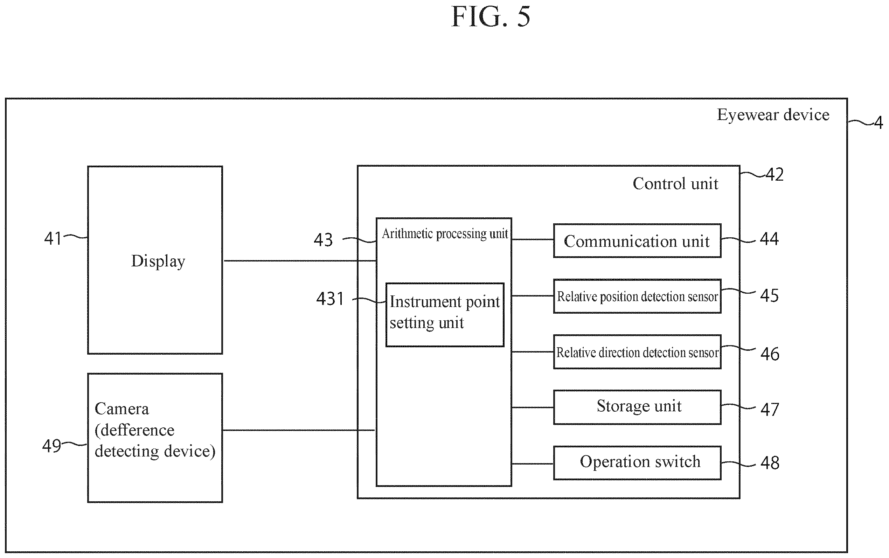

FIG. 4 is an external perspective view of the eyewear device 4 according to the first embodiment, and FIG. 5 is a configuration block diagram of the eyewear device 4. The eyewear device 4 is a wearable device to be worn on the head of a worker. The eyewear device 4 includes a display 41, a control unit 42, and a camera 49 as a difference detecting device.

The display 41 is a goggles-lens-shaped transmissive display that covers the eyes of the worker when the worker wears the display. As an example, the display 41 is an optical see-through display using a half mirror, and is configured to enable observation of a video image formed by synthesizing a real image of a landscape of the site (hereinafter, also referred to as "actual landscape") and a virtual image received by the control unit 42 by superimposing the virtual image on the real image.

The control unit 42 includes an arithmetic processing unit 43, a communication unit 44, a relative position detection sensor (hereinafter, simply referred to as "relative position sensor") 45, a relative direction detection sensor (hereinafter, simply referred to as "relative direction sensor") 46, a storage unit 47, and an operation switch 48.

The arithmetic processing unit 43 is a microcomputer configured by mounting at least a CPU and a memory (RAM, ROM) on an integrated circuit. The arithmetic processing unit 43 outputs information on a position and a direction of the eyewear device 4 detected by the relative position sensor 45 and the relative direction sensor 46 to the processing PC 6.

In addition, the arithmetic processing unit 43 receives three-dimensional CAD design data 661 from the processing PC 6, and displays it on the display 41 by superimposing a wire frame on an actual landscape. The CAD design data 661 is a three-dimensional design drawing of the observation site, created by using CAD. In addition, the arithmetic processing unit 43 receives synchronized observation data and observation data prediction from the processing PC 6 and displays these on the display 41 so that the data and the prediction are superimposed on the actual landscape.

The arithmetic processing unit 43 further includes an instrument point setting unit 431 configured by software. The instrument point setting unit 431 temporarily designates a next instrument point according to a worker's command on the display 41 displaying the landscape of the site. Further, the instrument point setting unit 431 calculates coordinates of the temporarily designated next instrument point as a point on a space in a coordinate space of the superimposed CAD design data 661, and outputs the coordinates to the processing PC 6. The instrument point setting unit 431 sets the next instrument point in the temporarily designated state according to a worker's command. Setting of the next instrument point will be described later.

The communication unit 44 enables communication with an external network, and connects to the Internet by using an Internet protocol (TCP/IP) and transmits and receives information to and from the processing PC 6.

The relative position sensor 45 performs wireless positioning from a GPS antenna, a Wi-Fi (registered trademark) access point, and an ultrasonic oscillator, etc., installed at the observation site, to detect a position of the eyewear device 4 in the observation site.

The relative direction sensor 46 consists of a combination of a triaxial accelerometer or a gyro sensor and a tilt sensor. The relative direction sensor 46 detects a tilt of the eyewear device 4 by setting the up-down direction as a Z-axis direction, the left-right direction as a Y-axis direction, and the front-rear direction as an X-axis direction.

The storage unit 47 is, for example, a memory card. The storage unit 47 stores programs that enable the arithmetic processing unit 43 to execute functions.

The operation switch 48 includes, for example, as illustrated in FIG. 4, a power button 48α for turning ON/OFF a power supply of the eyewear device 4, function buttons 48β₁, 48β₂, ad 48β₃ for performing different functions depending on processing to be executed, and a camera operation button 48γ for operating the camera 49 to perform imaging. The function buttons 48β₁, 48β₂, and 48β₃ of the eyewear device are buttons for executing assigned functions according to display on the display.

The camera 49 is a so-called digital camera including an optical system, an image sensor, and a signal processing unit not illustrated. The image sensor is, for example, a CCD sensor or a CMOS sensor. The image sensor has an orthogonal coordinate system with an origin set at the camera center, and is configured so that local coordinates of each pixel are identified. The signal processing unit signal-processes a captured image in a video format or a still image format. Imaging data can be transmitted to the processing PC through the communication unit 44.

The camera center of the camera 49 is fixed so that a positional relationship with the center of the main body of the eyewear device 4 is known. Therefore, a position and a direction of the camera 49 can be acquired based on detection results of the relative position sensor 45 and the relative direction sensor 46. A relative position and a relative direction of the camera 49 are managed in the same coordinate space as that of the main body of the eyewear device 4 by a synchronization measuring unit 601 described later.

### Processing PC

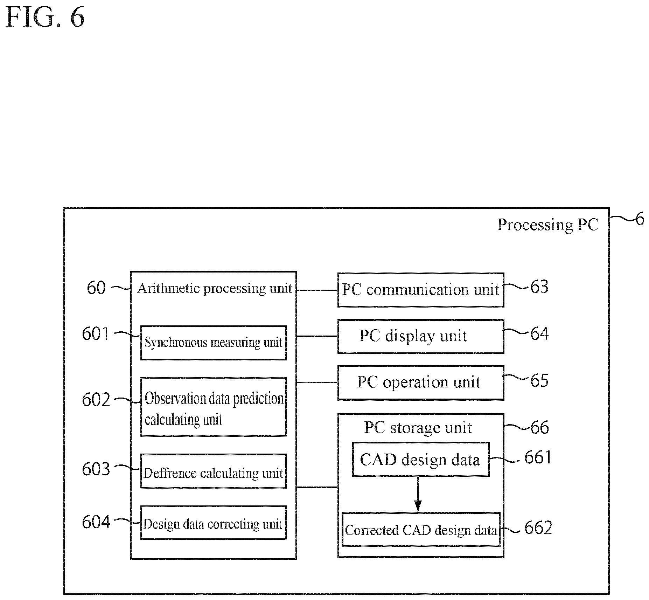

FIG. 6 is a configuration block diagram of the processing PC 6 according to the present embodiment. The processing PC 6 is a general-purpose personal computer, a dedicated hardware using a PLD (Programmable Logic Device), etc., a tablet terminal, or a smartphone, etc. The processing PC 6 includes at least an arithmetic processing unit 60, a PC communication unit 63, a PC display unit 64, a PC operation unit 65, and a PC storage unit 66. In the present embodiment, the arithmetic processing unit 60 is a data processing device, and the PC storage unit 66 is a storage device.

The PC communication unit 63 enables communication with an external network, and connects to the Internet by using an Internet protocol (TCP/IP), and transmits and receives information to and from the scanner 2 and the eyewear device 4.

The PC display unit 64 is, for example, a liquid crystal display. The PC operation unit 65 is, for example, a keyboard, a mouse, etc., and enables various inputs, selections, and determinations, etc.

The PC storage unit 66 is, for example, an HDD drive. The PC storage unit 66 includes at least three-dimensional CAD design data 661 of the observation site.

The arithmetic processing unit 60 is a control unit configured by mounting at least a CPU and a memory (RAM, ROM, etc.) on an integrated circuit. In the arithmetic processing unit 60, a synchronization measuring unit 601, an observation data prediction calculating unit 602, a difference calculating unit 603, and a design data correcting unit 604 are configured by software.

The synchronization measuring unit 601 receives information on a position and a direction of the scanner 2, and information on a position and a direction of the eyewear device 4, and converts a coordinate space of the scanner 2 and a coordinate space of the CAD design data 661 or corrected CAD design data 662 so that these coordinate spaces match a coordinate space of the eyewear device 4, and outputs the information to the eyewear device 4.

In addition, the synchronization measuring unit 601 converts observation data prediction DP calculated in the observation data prediction calculating unit 602 so that it matches the coordinate space of the eyewear device 4 as described later, and outputs the converted observation data prediction DP to the eyewear device 4.

In addition, the synchronization measuring unit 601 manages the relative position and the relative direction of the camera 49 in the same coordinate space as that of the eyewear device 4.

The observation data prediction calculating unit 602 calculates observation data prediction DP when the scanner 2 is installed at a next instrument point temporarily designated by the eyewear device 4. Here, the observation data prediction DP is point cloud data predicted to be acquired by the scanner 2 when the scanner 2 is installed at the temporarily designated next instrument point.

By using corrected design data corrected by the design data correcting unit 604, the observation data prediction calculating unit 602 calculates observation data prediction DP when the central coordinates of the scanner 2 are coordinates of the temporarily designated next instrument point in consideration of performance of the scanner 2 (that is, an irradiation distance of the distance-measuring light of the scanner 2, a pulse interval of the distance-measuring light, and rotation speed setting of the scanner 2) and disposition and a shape of a three-dimensional structure and a three-dimensional positional relationship of the three-dimensional structure with other three-dimensional structures in the corrected design data.

The difference calculating unit 603 extracts common characteristic points based on imaging data of the actual landscape captured by the camera 49 of the eyewear device 4 from two or more points, acquires three-dimensional coordinates of the actual landscape at a portion of a difference by a photo survey, and calculates the difference between the actual landscape and the CAD design data 661.

The design data correcting unit 604 corrects the CAD design data 661 by using the difference between the actual landscape and the CAD design data 661 calculated by the difference calculating unit 603, and creates corrected CAD design data 662.

### Method for Using Display System 1

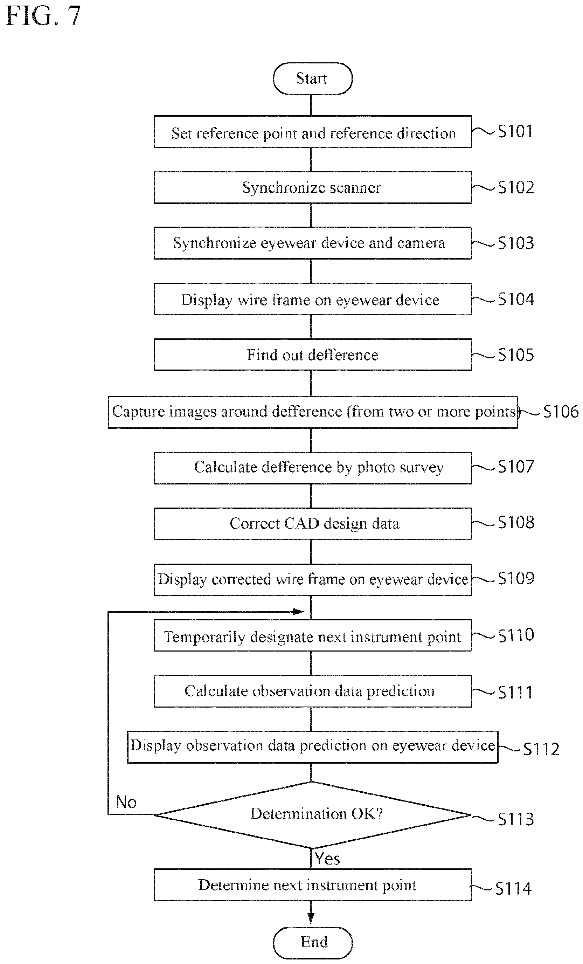

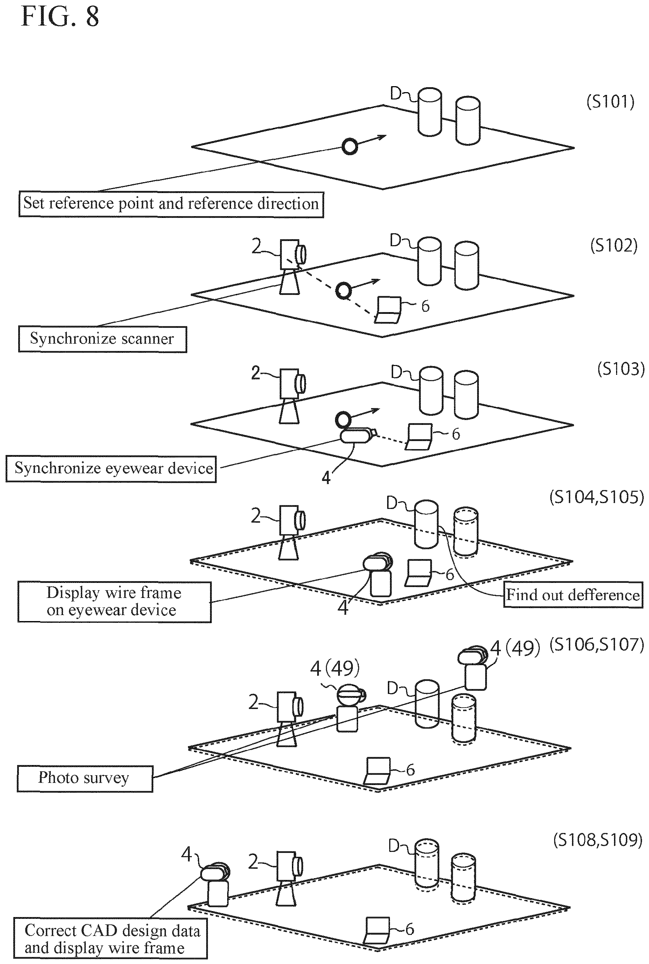

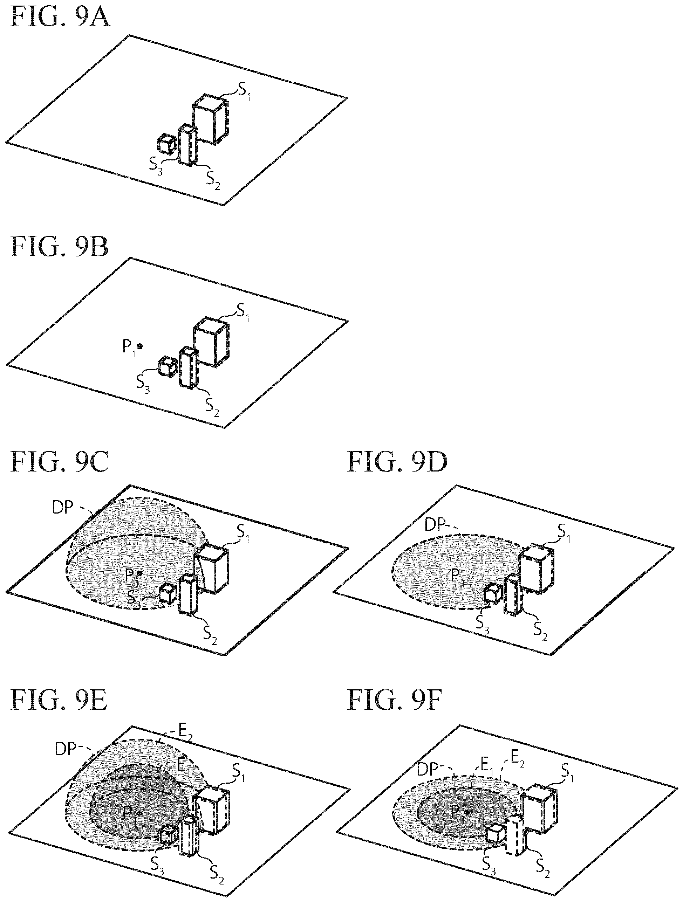

Next, an example of a method for using the display system 1 will be described. FIG. 7 is a flowchart of the method for using the display system 1. FIG. 8 is a work image view of Steps S101 to S109, and FIGS. 9A to 9F are bird's-eye views of images of display using the display system 1. In this example, the observation site has a portion D (difference) different from the CAD design data 661.

First, in Step S101, a worker sets a reference point and a reference direction at the observation site. As the reference point, an arbitrary point in the site is selected. The reference direction is a direction from the reference point to an arbitrarily selected characteristic point different from the reference point.

Next, in Step S102, the worker performs synchronization of the scanner 2. Specifically, the worker installs the scanner 2 at an arbitrary point in the site, and grasps absolute coordinates of the scanner 2 through observation using backward intersection, etc., including the reference point and the characteristic point selected in Step 101. The scanner 2 transmits its own coordinate information to the processing PC 6.

The synchronization measuring unit 601 of the processing PC 6 converts absolute coordinates of the reference point into (x, y, z) = (0, 0, 0) and recognizes the reference direction as a horizontal angle of 0°, and after this, in relation to information from the scanner 2, manages the relative position and the relative direction of the scanner 2 in a space with an origin set at the reference point.

Next, in Step S103, the worker performs synchronization of the eyewear device 4. Specifically, the worker installs the eyewear device 4 at the reference point, matches the center of the display 41 with the reference direction, and sets (x, y, z) of the relative position sensor 45 to (0, 0, 0) and sets (roll, pitch, yaw) of the relative direction sensor to (0, 0, 0). After this, in relation to data acquired from the eyewear device 4, the synchronization measuring unit 601 of the processing PC 6 manages the relative position and the relative direction of the eyewear device 4 in a space with an origin set at the reference point. As a result, concerning the camera 49 as well, the relative position and the relative direction of the camera 49 are managed in the space with an origin set at the reference point.

Synchronization of the eyewear device 4 is not limited to the method described above, and may be performed by, for example, a method in which the eyewear device 4 is provided with a laser device for indicating the center and the directional axis of the eyewear device 4, and by using a laser as a guide, the center and the directional axis are matched with the reference point and the reference direction.

Alternatively, a method is possible in which the eyewear device 4 is provided with a visual line sensor, etc., three or more characteristic points are marked in the CAD design data 661 and the actual landscape, coordinates of the eyewear device 4 are identified from angles of survey lines connecting the eyewear device 4 and the characteristic points, and are made correspondent to the coordinates of the reference point.

By executing the operation of Step S103, in Step S104, the eyewear device 4 displays a virtual image of the wire frame of the CAD design data 661 so that it is superimposed on the actual landscape as illustrated by dashed lines in FIG. 8. The relative position and the relative direction of the eyewear device 4 to the actual landscape are managed by the synchronization measuring unit 601 of the processing PC 6. Therefore, information of the CAD design data 661 synchronized with the actual landscape is transmitted from the processing PC 6 to the eyewear device 4. Then, on the display 41, a virtual image of the wire frame of the CAD design data 661 is displayed so as to be superimposed on the actual landscape as illustrated by the dashed lines.

Steps S101 to S103 described above are performed as initial setting of this display system 1. FIG. 9A is an image of display on the display 41 in a state where initial setting has been completed. In FIGS. 9A to 9F, for convenience of drawing the figures, the instrument center of the scanner 2 appears on the ground. In other words, an instrument height of the scanner 2 is assumed to be 0. However, in actuality, the instrument center of the scanner 2 is displaced upward by the instrument height.

Next, in Step S105, the worker finds out the difference D between the actual landscape and the wire frame.

Next, in Step S106, the worker in a state of wearing the eyewear device 4 captures images around the found difference D with the camera 49. The eyewear device 4 transmits imaging data to the processing PC 6. The worker captures images around difference D from two or more points.

Next, in Step S107, the difference calculating unit 603 of the processing PC 6 extracts common characteristic points based on two or more imaging data, and calculates three-dimensional coordinates around the difference D by a photo survey.

Next, in Step S108, the design data correcting unit 604 corrects the CAD design data 661 based on the three-dimensional coordinates of the difference D, and transmits a wire frame based on the corrected CAD design data 662 to the eyewear device 4.

Next, in Step S109, the eyewear device 4 displays the corrected wire frame on the display 41 so that it is superimposed on the actual landscape.

Next, in Step S110, the eyewear device 4 temporarily designates a next instrument point P₁ (FIG. 9B) according to worker's designation. Details of the designation are as follows.

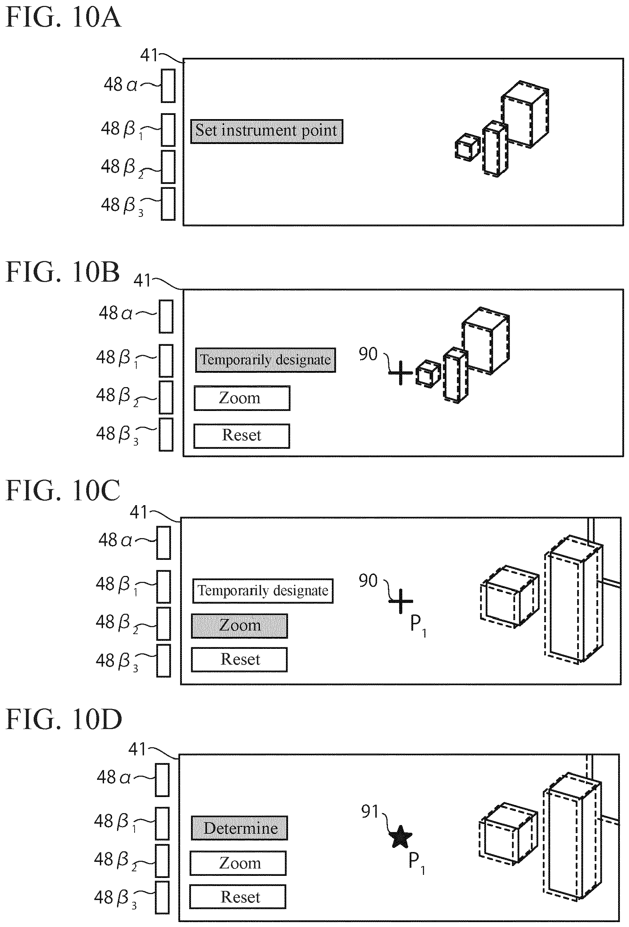

On the display 41, as illustrated in FIG. 10A, corresponding to layout of the operation switch 48 (power button 48α, and function buttons 48β₁, 48β₂, and 48β₃) , respective functions are displayed. The worker selects an instrument point setting mode by pressing down the function button 48β₁.

Then, as illustrated in FIG. 10B, the instrument point setting unit 431 displays a cross pointer 90 indicating a center of the display 41 at the center of the display 41. On the display 41, functions of the function buttons 48β₁, 48β₂, and 48β₃ are displayed. Displaying in such manner enables a worker to easily grasp functions of the buttons without paying any special attention and operate the eyewear device 4.

The worker temporarily designates a next instrument point P₁ as a point on a space by placing the pointer 90 on the position to be set as a next instrument point and pressing down the function button 48β₁ while watching display on the display 41. At this time, as illustrated in FIG. 10C, the display may be configured so that the worker enlarges the display by pressing the function button 48β₂ and temporarily designate the next instrument point P₁. Pressing the function button 48β₂ once enlarges the display at a predetermined magnification. This can improve accuracy of temporary designation.

Next, the instrument point setting unit 431 calculates coordinates of the temporarily designated instrument point P₁, and transmits the coordinates to the processing PC 6. Accordingly, the instrument point P₁ turns into a temporarily designated state, and display of "Temporarily designate" on the display 41 switches to display for selecting whether to determine the designation.

Next, in Step S111, the observation data prediction calculating unit 602 of the processing PC 6 synchronizes coordinate information of the temporarily designated next instrument point P₁ and the corrected CAD design data 662. Then, the observation data prediction calculating unit 602 calculates point cloud data predicted to be acquired by the scanner 2 when the scanner 2 is installed at the next instrument point, that is, observation data prediction DP in consideration of performance of the scanner 2 (that is, an irradiation distance of distance-measuring light of the scanner 2, a pulse interval of the distance-measuring light, and rotation speed setting of the scanner 2) and dispositions and shapes of three-dimensional structures and a three-dimensional positional relationship of the three-dimensional structures in the corrected CAD design data 662.

Specifically, the scanner 2 acquires point cloud data by performing rotational scanning (full dome scanning) with the distance-measuring light 360° in the vertical rotation direction and 180° in the horizontal rotation direction from the instrument center. Therefore, a region in which point cloud data can be acquired extends in all directions horizontally and vertically around the coordinates of the instrument center.

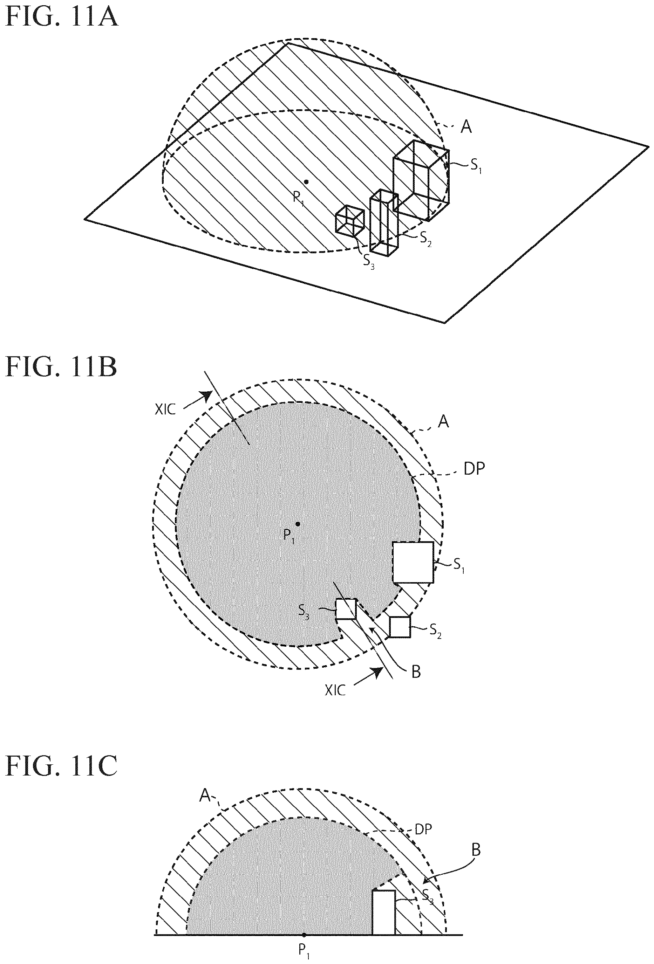

In addition, point cloud density of the point cloud data becomes higher as the pulse interval of the distance-measuring light becomes narrower, becomes lower as the rotation speed of the scanner 2 becomes higher. Point cloud density becomes lower with increasing distance from the scanner 2. In this way, the point cloud density depends on the pulse interval of the distance-measuring light, the irradiation distance of the distance-measuring light, and the rotation speed of the scanner 2. In addition, the scanner 2 is installed on the ground, and is relatively near the ground. Therefore, a point cloud data acquirable region A satisfying a predetermined point cloud density has, for example, the shape of a semispherical dome centered at the central coordinates of the scanner 2 as illustrated in FIG. 11A. For convenience, the drawings are plotted on the assumption that the instrument center is at the same position as the point P₁ on the ground without regard for the instrument height, however, an actual instrument center is displaced upward by the instrument height from the point P₁.

FIG. 11B is a sectional view along the ground plane surface of FIG. 11A, and FIG. 11C is a sectional view along line XIC-XIC in FIG. 11B. In the case of full dome scanning, in the point cloud data acquirable region A, the distance-measuring light is emitted radially in all directions from the instrument center of the scanner 2. When there are three-dimensional structures S₁, S₂, and S₃ in the point cloud data acquirable region, the distance-measuring light is reflected (shielded) by the three-dimensional structures S₁, S₂, and S₃, and the opposite side of the scanner 2 becomes a point cloud data unacquirable region B.

The observation data prediction calculating unit 602 calculates a region in which point cloud data are predicted to be acquirable at a predetermined density or more as observation data prediction DP in consideration of the point cloud data acquirable region A obtained from the irradiation distance of the distance-measuring light and coordinates of the instrument center of the scanner 2, dispositions and shapes of three-dimensional structures and a three-dimensional positional relationship of the three-dimensional structures in the corrected CAD design data 662, the irradiation distance of the distance-measuring light, the pulse interval of the distance-measuring light, and rotation speed setting of the scanner 2.

At this time, values of the pulse interval of the distance-measuring light of the scanner 2 and rotation speed setting of the scanner 2 to be used for calculation of the observation data prediction DP, and a value of the instrument height, etc., of the scanner 2 for obtaining the central coordinates of the scanner 2, may be acquirable by the observation data prediction calculating unit 602 through the communication unit 31 of the scanner 2. Alternatively, these may be input by a worker from the PC operation unit 65.

Next, in Step S112, the eyewear device 4 receives the observation data prediction DP from the processing PC 6, and displays the observation data prediction DP on the display 41 so that it is superimposed on the actual landscape and the wire frame as illustrated in FIG. 9C.

As a manner of display of the observation data prediction DP, for example, as illustrated in FIG. 9C, it may be three-dimensionally displayed. Alternatively, the observation data prediction DP may be two-dimensionally displayed on the ground plane surface of the observation site as illustrated in FIG. 9D. Alternatively, the three-dimensional display in FIG. 9C and the two-dimensional display in FIG. 9D may be switchable.

For example, as illustrated in FIG. 9E, a first region E1 with point cloud density falling within a desired range, and a second region E2 which is disposed at an outer circumferential side of the first region E1, and has point cloud density lower than that of the first region E1, which can realize desired overlapping by setting an instrument point after the next in this region and acquiring point cloud data, may be displayed in a distinguishable manner such as being displayed in different colors.

In the case of display in different colors, the first region E1 and the second region E2 may be shaded by similar colors (for example, the first region E1 is shaded by a dark color, and the second region E2 is shaded by a light color) . In addition, as illustrated in FIG. 9F, the first region E1 and the second region E2 may be two-dimensionally displayed on the ground of the observation site.

Next, in Step S113, the worker visually confirms the observation data prediction DP displayed on the display 41 and determines whether to set the temporarily designated point as a next instrument point, and when the worker is satisfied with the measurement region (Yes), the worker presses the function button 48β₁ (determination button), and accordingly, the processing shifts to Step S109, and the instrument point setting unit 431 determines the next instrument point, and outputs the next instrument point as determined next instrument point information to the processing PC 6 and ends the processing.

When the worker is not satisfied with the temporarily designated point in Step S113 (NO), the worker resets the temporarily designated state by pressing the function button 48β₃. Then, the processing returns to Step S110, and the worker temporarily designates another point as a next instrument point P₁. A configuration may be made so that a touch sensor is provided on an outer surface of the goggles portion of the eyewear device 4, and a next instrument point P₁ is determined when the worker touches the outer surface of the goggles.

After the determination in Step S114, the next instrument point P₁ is displayed as, for example, a star so that it can be recognized as a determined point as illustrated in FIG. 10D. The worker marks the next instrument point on the actual ground surface while watching the display of the determined instrument point and display of the actual landscape image on the display 41. This operation may be performed by another worker according to a command from a worker wearing the eyewear device 4.

Then, the scanner 2 is installed at the determined instrument point P₁, and coordinates and a direction angle of the scanner 2 are measured by a method such as backward intersection. In addition, point cloud data observation is performed by the scanner 2.

Then, the worker sets a next instrument point P₂ in the same manner as in Steps S110 to S113. At this time, by setting a next instrument point P₂ in the second region E2, point cloud data overlapping becomes preferable. Then, by repeating Steps S101 to S114, point cloud observation is performed at respective instrument points P₃, P₄... while setting the points in order, and accordingly, the entire observation site is observed. In the same observation site for which initial setting has been made once, setting of a reference point and a reference direction in Step S101 and synchronization of the eyewear device and the camera in Step S103 can be omitted.

In the present embodiment, a configuration is made in which, a portion different between the actual landscape and the CAD design data 661 is enabled to be recognized with the wire frame. Then, coordinates of a portion of the difference D are calculated through a photo survey by the camera 49, the CAD design data 661 are corrected so as to match the actual landscape, and a wire frame of the corrected CAD design data 662 is displayed on the display 41 of the eyewear device 4.

With this configuration, even when there is a portion different between the CAD design data 661 and the site, the site can be observed with using the wire frame based on the corrected CAD design data 662.

In the present embodiment, the eyewear device 4 including the relative position sensor 45 and the relative direction sensor 46 is provided with the camera 49, and is configured so that a positional relationship between the eyewear device 4 and the camera is known, so that the relative position and the relative direction of the camera 49 can be managed in synchronization with the eyewear device 4 without requiring individual synchronizing operations.

In addition, the eyewear device 4 as a wearable device is provided with the camera 49, and is configured so that a photo survey around the difference D is performed with the camera 49, and therefore, even when images are captured from two or more points, the operation can be easily performed without requiring troublesome operations such as installation of the camera.

Further, the eyewear device 4 is configured so that, by using the eyewear device 4, a next instrument point P₁ is temporarily designated, and observation data prediction DP from the temporarily designated instrument point P₁ is calculated based on the corrected CAD design data 662 and displayed on the display 41 of the eyewear device 4. A worker can set an instrument point while watching the observation data prediction DP according to an actual situation of the observation site even when the CAD design data 661 differ from the actual situation of the observation site. Accordingly, an accurate instrument point that enables acquisition of point cloud data without omission can be set, and this assists observation of point cloud data without omission.

By displaying the observation data prediction DP in the shape of a three-dimensional semispherical dome, a worker can easily recognize an observable range. In addition, by two-dimensionally displaying the observation data prediction DP on the ground plane surface of the observation site, a next instrument point is designated on the ground plane surface, so that a region preferable for designation of an instrument point can be easily recognized.

By displaying the observation data prediction DP so that a first region E1 with point cloud density falling within a desired range, and a second region E2 which is disposed at an outer circumferential side of the first region E1, and has point cloud density lower than that of the first region E1, which can realize desired overlapping by setting an instrument point after the next in this region and acquiring point cloud data, are displayed in a distinguishable manner, a worker can clearly recognize a region preferable for setting a next instrument point. As a result, the worker can easily set a next instrument point that minimizes unnecessary overlapping while holding point cloud data overlapping, so that the entire observation site can be efficiently measured.

Shading the first region E1 and the second region E2 by, for example, dark and light similar colors, is preferable because a worker can intuitively recognize an actual point cloud density difference.

In this method, when a sufficient number of characteristic points cannot be obtained around the difference D, a reflection target, etc., may be installed around the difference D and a photo survey may be performed.

### Modification 1

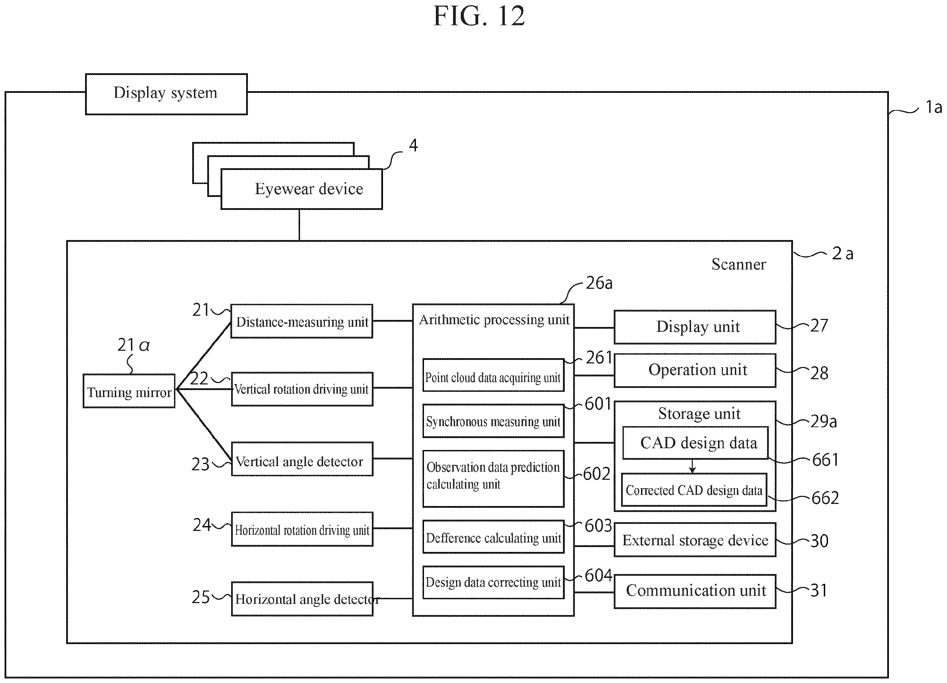

FIG. 12 is a configuration block diagram of a display system 1a according to a modification of the display system 1.

The display system 1a includes a scanner 2a and the eyewear device 4, and does not include the processing PC 6. The scanner 2a includes the synchronization measuring unit 601, the observation data prediction calculating unit 602, the difference calculating unit 603, and the design data correcting unit 604 in an arithmetic processing unit 26a, and includes CAD design data 661 in a storage unit 29a. In the present modification, the arithmetic processing unit 26a of the scanner 2a is a data processing device, and the storage unit 29a is a storage device.

The present modification is realized when the scanner 2a includes a high-performance arithmetic processing unit 26a and a small-sized high-capacity storage unit 29a, and can further simplify the configuration of the display system 1a.

### Modification 2

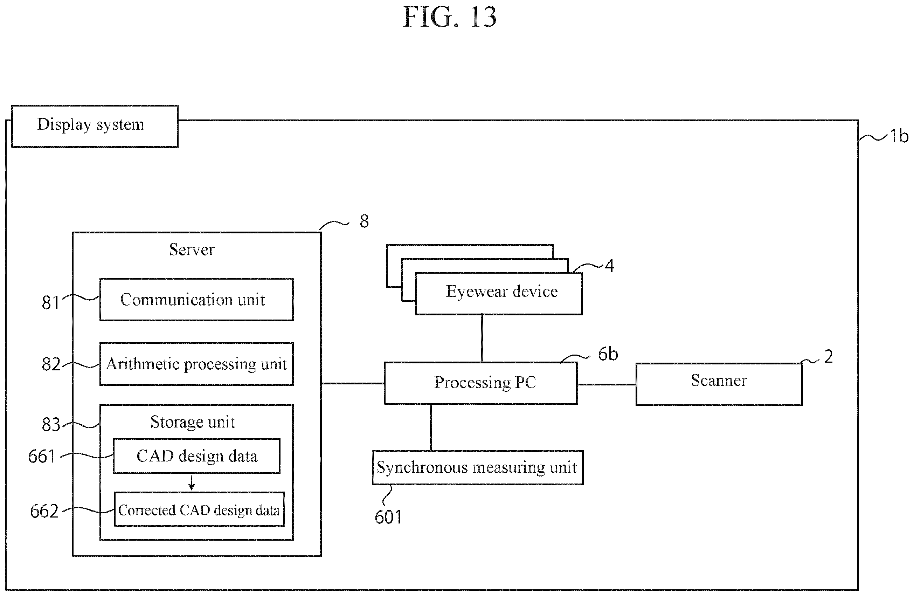

FIG. 13 is a configuration block diagram of a display system 1b according to another modification. The display system 1b includes the scanner 2, the eyewear device 4, a processing PC 6b, and a server 8. The server 8 includes a communication unit 81, an arithmetic processing unit 82, and a storage unit 83.

In the present modification, CAD design data 661 are stored not in a PC storage unit 66 of the processing PC 6b but in the storage unit 83 of the server 8. The processing PC 6b acquires CAD design data 661 of a necessary portion from the server 8 through the PC communication unit 63 in Step S104 of the flowchart in FIG. 7. In the present modification, an arithmetic processing unit 60 of the PC 6b is a data processing device, and the storage unit 83 of the server 8 is a storage device.

Accordingly, the burden on the PC storage unit 66 of the processing PC 6b can be reduced.

### Modification 3

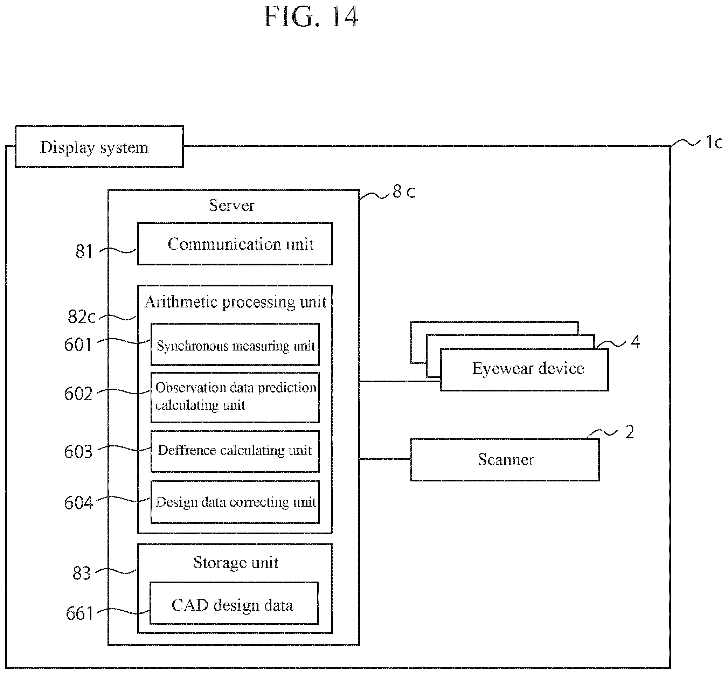

FIG. 14 is a configuration block diagram of a display system 1c according to still another modification. The display system 1c includes the scanner 2, the eyewear device 4, and a server 8c, and does not include the processing PC 6. In the display system 1c, not the PC storage unit 66 but the storage unit 83 of the server 8c stores CAD design data 661.

In addition, in place of the processing PC 6, an arithmetic processing unit 82c of the server 8c includes the synchronization measuring unit 601, the observation data prediction calculating unit 602, the difference calculating unit 603, and the design data correcting unit 604. In Modification 3, the arithmetic processing unit 82c of the server 8c is a data processing device, and the storage unit 83 of the server 8c is a storage device.

Accordingly, arithmetic processing in Steps S101 to S103, S107 to S110, and S112 can be increased in speed.

### Other Modifications

As other modifications, setting of a next instrument point can be modified as follows.

For example, the eyewear device 4 is configured to include a visual line sensor that detects a line of vision of a worker based on a positional relationship between an eye inner corner position and an iris position of the worker. In addition, the instrument point setting unit 431 is configured to, according to a predetermined action such as a blink, temporarily designate a position of a worker's line of vision designated on the display 41 as a next instrument point, and calculate coordinates of the next instrument point.

With this configuration, the worker can set a next instrument point only by changing a viewpoint or closing the eyes, and the operation is easily performed.

Alternatively, the display system 1 is configured to include a magnetic motion capture device for fingers (for example, refer to Japanese Published Unexamined Patent Application No. 2007-236602) capable of communicating with the eyewear device through the processing PC 6. Information on a position and a direction of the motion capture device can be synchronized by the synchronization measuring unit 601. In addition, the display may be configured such that, when a worker points, with his/her fingertip wearing the motion capture device, at a point to be set as a next instrument point while confirming display on the display 41, the point is temporarily designated as a next instrument point, and coordinates of the temporarily designated next instrument point are calculated.

With this configuration, the worker can temporarily designate a next instrument point by performing a simple operation of pointing at the point to be designated with his/her finger, so that the operation is easily performed.

### Second Embodiment

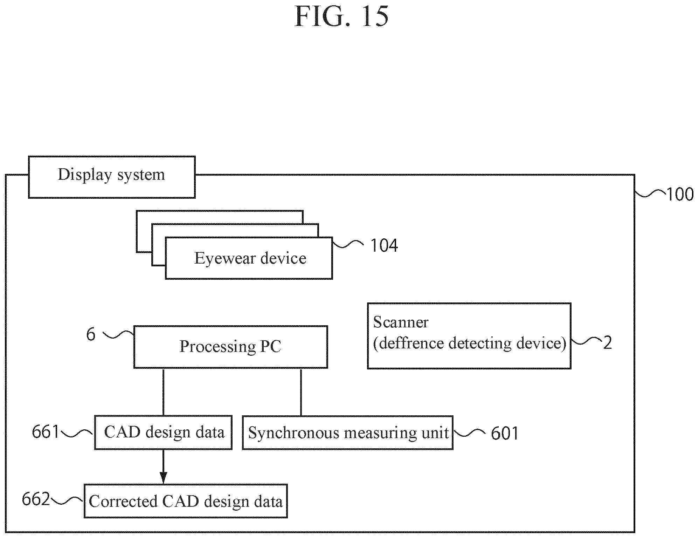

FIG. 15 is a configuration block diagram of a display system 100 according to a second embodiment of the present invention. An eyewear device 104 of the display system 100 does not have to include the camera 49, and the scanner 2 operates as a difference detecting device.

Specifically, in Steps 106 and 107, instead of capturing images around a difference with the camera 49 and performing a photo survey, three-dimensional point cloud data around the difference D are measured with the scanner 2, and the difference calculating unit 603 calculates the difference based on the acquired three-dimensional point cloud data of the site and CAD design data 661.

With the configuration described above, even by using the scanner 2 as the difference detecting device in place of the camera 49, the same effects as those in the first embodiment can be obtained. As initial setting, the scanner 2 has originally been synchronized with the eyewear device 4, so that it does not require a separate synchronizing operation for difference detection.

Although preferred embodiments of the present invention have been described above, the embodiments described above are examples of the present invention, and these can be combined based on the knowledge of a person skilled in the art, and such combined embodiments are also included in the scope of the present invention.

### Reference Signs List

1, 1a, 1b, 1c: Display system
2, 2a: Scanner
26a: Arithmetic processing unit (data processing device)
261: Point cloud data acquiring unit
29a: Storage unit (storage device)
31: (Scanner) communication unit
4: Eyewear device
41: Display
431: Instrument point setting unit
44: (Eyewear device) communication unit
45: Relative position detection sensor (relative position sensor)
46: Relative direction detection sensor (relative direction sensor)
49: Camera (difference detecting device)
6, 6b, 6c: Processing PC
60: Arithmetic processing unit (data processing device)
601: Synchronization measuring unit
602: Observation data prediction calculating unit
603: Difference calculating unit
604: Design data correcting unit
661: CAD design data
662: Corrected CAD design data
63: PC communication unit
66: PC storage unit
81: (Server) communication unit
82: Arithmetic processing unit (data processing device)

## Claims

1. An eyewear display system comprising:
a scanner including a point cloud data acquiring unit configured to acquire point cloud data by measuring distances and angles to irradiation points by horizontal and vertical scanning with distance-measuring light;
an eyewear device including a display, a relative position detection sensor configured to detect a position of the device, and a relative direction detection sensor configured to detect a direction that the device faces;
a storage device including CAD design data of an observation site;
a difference detecting device configured to detect a difference between the CAD design data and the site; and
a data processing device including a synchronization measuring unit configured to receive information on a position and a direction of the scanner, information on a position and a direction of the eyewear device, and information on a position and a direction of the difference detecting device, and synchronize a coordinate space of the scanner, a coordinate space of the eyewear device, a coordinate space of the difference detecting device, and a coordinate space of the CAD design data, a difference calculating unit configured to calculate the difference in a synchronized coordinate space, and a design data correcting unit configured to generate corrected CAD design data by correcting the CAD design data based on calculation results of the difference, wherein
the scanner, the eyewear device, the storage device, and the difference detecting device are connected to the data processing device so as to enable data inputs and outputs, and
the synchronization measuring unit converts the corrected CAD design data into a wire frame viewed from the eyewear device, and the eyewear device displays the wire frame of the corrected CAD design data superimposed on an actual landscape on the display.

2. The eyewear display system according to Claim 1, wherein
the difference detecting device is a camera, and
the camera is fixed to the eyewear device so that their positional relationship is known, and
the difference calculating unit calculates the difference by performing a photo survey by using imaging data around the difference captured from two or more points by the camera.

3. The eyewear display system according to Claim 1, wherein
the difference detecting device is the scanner, and
the difference calculating unit calculates the difference based on three-dimensional point cloud data around the difference acquired by the scanner.

4. The eyewear display system according to any of Claims 1 to 3, wherein
the eyewear device includes an instrument point setting unit enables a worker to temporary designate a next instrument point on display of the display,
the data processing device includes an observation data prediction calculating unit configured to calculate a region in which point cloud data are predicted to be acquirable at a predetermined density or more as observation data prediction when the scanner is installed at the temporarily designated next instrument point by calculating coordinates of the next instrument point, and output the observation data prediction to the eyewear device,
the observation data prediction calculating unit calculates observation data prediction in consideration of performance of the scanner and a three-dimensional structure in the corrected CAD design data, and
the eyewear device displays the wire frame and the observation data prediction on the display by superimposing the wire frame and the observation data prediction on the actual landscape.

5. The eyewear display system according to any of Claims 1 to 4, wherein the observation data prediction is two-dimensionally displayed on a ground surface of the observation site on the display.

6. The eyewear display system according to any of Claims 1 to 5, wherein the observation data prediction is three-dimensionally displayed in an observation site space on the display.

7. The eyewear display system according to any of Claims 1 to 6, wherein the performance of the scanner is an irradiation distance of the distance-measuring light, a pulse interval of the distance-measuring light, and rotation speed setting of the scanner.

8. The eyewear display system according to any of Claims 1 to 7, wherein the instrument point setting unit temporarily designates the next instrument point with enlarging the display on the display in accordance with the worker's operation.

9. The eyewear display system according to any of Claims 1 to 8, wherein the observation data prediction is displayed in such a manner that a first region with point cloud density falling within a desired range, and a second region with point cloud data density lower than that of the first region, but in which desired overlapping by setting an instrument point after the next in this region and acquiring point cloud data, the second region being disposed at an outer circumferential side of the first region are distinguishable.

10. An eyewear display method using an eyewear display system including a scanner including a point cloud data acquiring unit configured to acquire point cloud data by measuring distances and angles to irradiation points by horizontal and vertical scanning with distance-measuring light, an eyewear display device including a display, a relative position detection sensor configured to detect a position of the device, and a relative direction detection sensor configured to detect a direction that the device faces, a storage device including CAD design data of an observation site, a difference detecting device configured to detect a difference between the CAD design data and the site, and a data processing device configured to connect to the scanner, the eyewear device, the storage device, and the difference detecting device are connected to the data processing device so as to enable data inputs and outputs, the method comprising:
the data processing device receiving information on a position and a direction of the scanner, information on a position and a direction of the eyewear device, and information on a position and a direction of the difference detecting device, and synchronizing a coordinate space of the scanner, a coordinate space of the eyewear device, a coordinate space of the difference detecting device, and a coordinate space of the CAD design data,
the data processing device calculating the difference in a synchronized coordinate space,
the data processing device generating corrected CAD design data by correcting the CAD design data based on calculation results of the difference,
the data processing device converting the corrected CAD design data into a wire frame viewed from the eyewear device, and
the eyewear display device displaying the wire frame of the corrected CAD design data superimposed on an actual landscape on the display.
